Europäisches Patentamt

European Patent Office

Office européen des brevets

(19)

(11) EP 0 921 449 B1

(12) **FASCICULE DE BREVET EUROPEEN**

(45) Date de publication et mention
de la délivrance du brevet:
**23.05.2001 Bulletin 2001/21**

(51) Int Cl.⁷: **G03H 1/08**, G03H 1/26

(21) Numéro de dépôt: **97402797.1**

(22) Date de dépôt: **20.11.1997**

(54) **Procédé et dispositif holographiques assistés par ordinateur**

Rechnergestütztes holographisches Verfahren und Vorrichtung

Computer-assisted holographic method and device

(84) Etats contractants désignés:
**AT BE CH DE DK ES FI FR GB GR IE IT LI LU MC NL PT SE**

(43) Date de publication de la demande:
**09.06.1999 Bulletin 1999/23**

(73) Titulaire: **EUROPEAN COMMUNITY**
**2920 Luxembourg (LU)**

(72) Inventeurs:
- **Grossetie, Jean-Claude**
  **21027 Ispra (Varese) (IT)**
- **Noirard, Pierre**
  **67640 Lipsheim (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 588 617**     **WO-A-90/04218**
**US-A- 5 668 648**

- **MICHELIN S ET AL: "Fourier-transform computer-generated hologram: a variation on the off-axis principle" PRACTICAL HOLOGRAPHY VIII, SAN JOSE, CA, USA, 7-9 FEB. 1994, vol. 2176, ISSN 0277-786X, PROCEEDINGS OF THE SPIE - THE INTERNATIONAL SOCIETY FOR OPTICAL ENGINEERING, 1994, USA, pages 249-254, XP002061907**

## Description

La présente invention concerne de manière générale la restitution d'images en trois dimensions, et plus particulièrement la synthèse numérique d'hologrammes et la restitution d'images en trois dimensions à partir de ces hologrammes.

Plusieurs techniques de restitution d'images en trois dimensions sont connues.

Certains dispositifs, dits « stéréoscopiques », produisent deux images décalées d'une même scène qui sont chacune vues par un oeil respectif d'un observateur. La profondeur du champ et le volume sont alors reconstruits par le cerveau de l'observateur. La majorité de ces dispositifs nécessitent le port d'accessoires encombrants tels que lunettes ou casques pour séparer et différencier les images que l'on envoie à chaque oeil. En outre, ils ne présentent qu'un angle de vision binoculaire de la scène à représenter.

Une autre technique, dite « autostéréoscopique », consiste, dans un cas particulier, à prendre une photographie d'une scène à travers un maillage plan de lentilles suffisamment petites, de façon à associer à chaque lentille un point de vue de la scène photographiée. La photographie ainsi obtenue donne l'illusion de relief, mais produit un effet de profondeur limité. Cette méthode ne respecte pas l'accommodation oculaire naturelle, et permet difficilement, dans l'état actuel de la technique, la restitution d'images tridimensionnelles en temps réel.

L'holographie est la méthode de restitution d'images tridimensionnelles la plus fidèle, puisqu'elle permet de restituer le champ optique tel qu'il est émis par la scène. Cette méthode respecte notamment parfaitement l'accommodation oculaire. L'holographie analogique consiste à projeter une onde optique cohérente émise par un laser sur un objet, à recueillir à partir de cette onde une onde optique diffusée par l'objet, et à faire interférer cette onde optique diffusée avec une onde de référence constituée par une autre partie du faisceau émis par le laser pour produire un champ d'interférences. Le champ d'interférences est enregistré sur un support photosensible tel qu'une plaque photographique. Une image en trois dimensions de la scène initiale peut alors être observée en éclairant la plaque photographique par une onde cohérente. Cette méthode purement analogique offre une excellente qualité de restitution, mais ne permet pas la restitution d'images tridimensionnelles en temps réel.

Des méthodes holographiques numériques destinées à produire des images tridimensionnelles en temps réel existent. Le brevet américain US 5 668 648 décrit un dispositif holographique assisté par ordinateur capable de synthétiser numériquement l'hologramme d'un objet virtuel et de restituer une image à partir de cet hologramme. L'objet virtuel est échantillonné en des points d'échantillonnage, qui sont considérés comme autant de sources optiques sphériques élémentaires.

Des champs de diffraction sont calculés respectivement pour ces points d'échantillonnage, puis sont superposés. Une technique d'interpolation est utilisée pour améliorer la résolution du champ de diffraction résultant. Un champ d'interférences, ou hologramme, est alors généré en fonction du champ de diffraction résultant et de données représentatives d'une onde de référence, pour être reproduit physiquement par un modulateur spatial de lumière.

La synthèse numérique d'hologramme selon la méthode ci-dessus nécessite des calculs longs et compliqués, notamment pour déterminer un champ de diffraction associé à chaque point d'échantillonnage de l'objet et pour interpoler le champ de diffraction résultant.

La présente invention vise à fournir un procédé de synthèse holographique capable de générer numériquement en temps réel des hologrammes, nécessitant de manière générale moins de calculs que les procédés de la technique antérieure, et permettant d'assurer une restitution spatiale tridimensionnelle d'images.

A cette fin, il est prévu un procédé pour produire un hologramme à partir d'un objet virtuel défini dans un espace géométrique à trois dimensions, caractérisé en ce qu'il comprend les étapes suivantes :

produire par calcul un ensemble d'images bidimensionnelles représentatives de l'objet selon des points de vue respectifs différents dans l'espace à trois dimensions,
produire par calcul des hologrammes correspondant respectivement auxdites images bidimensionnelles, et
combiner lesdits hologrammes pour former un hologramme de l'objet.

Par objet virtuel, on entend des données représentatives d'un objet réel, qui sont par exemple mémorisées dans un ordinateur.

Les étapes définies ci-dessus constituent un modèle numérique de la production d'un hologramme analogique d'un objet tridimensionnel. En effet, un tel hologramme analogique est constitué par une combinaison d'hologrammes, ou champs diffractifs, élémentaires qui, lorsqu'ils sont individuellement éclairés par un pinceau de lumière cohérente, permettent de restituer des images bidimensionnelles représentatives de l'objet considéré selon des points de vue respectifs différents.

Avantageusement, l'étape de produire par calcul l'ensemble d'images bidimensionnelles comprend les étapes suivantes :

définir dans l'espace à trois dimensions une matrice de points située dans un premier plan géométrique disjoint de l'objet, et
projeter les images de l'objet vues depuis respectivement les points de ladite matrice sur un second plan géométrique, qui est de préférence intercalé entre l'objet et le premier plan et parallèle au premier plan, les images projetées constituant lesdites images bidimensionnelles.

De préférence, l'étape de projeter consiste, pour chaque point de la matrice, à projeter des points de l'objet sur le second plan suivant des droites respectives passant par lesdits points de l'objet et ledit chaque point de la matrice.

Selon l'invention, les images bidimensionnelles sont définies par des fonctions réelles respectives et l'étape de produire par calcul les hologrammes comprend les étapes suivantes pour une image bidimensionnelle donnée :

transformer l'image bidimensionnelle donnée définie par la fonction réelle correspondante en une image bidimensionnelle complexe définie par une fonction complexe,
suréchantillonner l'image complexe,
simuler la production d'une image diffractée résultant de la diffraction d'une onde optique par l'image complexe suréchantillonnée,
additionner un champ complexe représentatif d'une onde optique de référence à l'image diffractée résultante, et
coder des valeurs prises par l'amplitude de la somme dudit champ complexe et de l'image diffractée résultante afin de produire l'hologramme associé à l'image bidimensionnelle donnée.

Par fonction réelle ou complexe, on entend ici une fonction à deux variables prenant des valeurs réelles ou complexes respectivement. La fonction réelle est typiquement une distribution d'intensités, alors que la fonction complexe est une distribution de nombres complexes définis chacun par une amplitude et une phase réelles.

L'étape de transformer l'image bidimensionnelle donnée en une image complexe permet de déterminer, à partir de l'image bidimensionnelle donnée, une image qui est décrite par des nombres complexes qui représentent au mieux le champ optique réel et facilitent les calculs mis en oeuvre dans l'étape de simuler la production d'une image diffractée.

L'étape de suréchantillonner l'image complexe permet d'augmenter le nombre de pixels de l'hologramme résultant de l'image bidimensionnelle donnée, puisque le calcul mis en oeuvre au cours des étapes suivantes de simuler et additionner sont effectués sur un plus grand nombre de points d'image. L'étape de suréchantillonner peut consister à insérer l'image complexe dans une image plus grande dans laquelle l'intensité des pixels extérieurs à l'image complexe initiale est choisie égale à 0. Dans ce cas, le fait de mettre en oeuvre l'étape de suréchantillonner l'image complexe après les étapes de transformer l'image bidimensionnelle en une image complexe évite de devoir calculer la fonction complexe pour les points de l'image suréchantillonnée extérieurs à l'image complexe initiale.

L'étape de transformer peut comprendre les étapes suivantes :

déterminer des valeurs d'amplitude dépendant chacune de la racine carrée d'une valeur correspondante prise par la fonction réelle de l'image bidimensionnelle donnée, et
associer une phase à chacune des valeurs d'amplitude de sorte qu'une valeur d'amplitude et une valeur de phase soient définies pour chaque point de l'image complexe.

Le fait d'associer une phase à chaque valeur d'amplitude permet d'éviter que l'hologramme résultant de l'image bidimensionnelle donnée présente des pics d'amplitude trop élevés, en moyennant les valeurs d'amplitude de cet hologramme.

L'étape de simuler la production d'une image diffractée peut comprendre le calcul d'au moins l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant de la composition d'au moins deux des transformations précitées.

Le choix de la transformation complexe peut dépendre de la distance entre les premier et second plans géométriques, chaque transformation complexe étant plus particulièrement adaptée pour une plage prédéterminée de distances entre les premier et second plans géométriques.

Plus précisément, l'étape de simuler la production d'une image diffractée peut consister à calculer un produit de convolution, associé à l'image complexe suréchantillonnée, de deux composantes, en appliquant la transformation inverse de ladite transformation complexe au produit des transformations complexes respectives desdites deux composantes.

Jusqu'à présent, l'homme du métier considérait que pour calculer un tel produit de convolution, la transformation de Fourier était la meilleure transformation possible, puisque cette transformation est largement utilisée en optique. Il a toutefois été trouvé expérimentalement par les présents inventeurs que l'utilisation, parmi les transformations complexes mentionnées ci-dessus, de l'une des transformations autres que la transformation de Fourier permet de produire un hologramme résultant pour une image bidimensionnelle donnée de bien meilleure qualité, c'est-à-dire un hologramme qui, lorsqu'il est reproduit physiquement et éclairé par une source cohérente, permet de restituer une image associée à l'image bidimensionnelle donnée plus fine que celles généralement produites par les systèmes de la technique antérieure.

L'étape de combiner les hologrammes peut consister notamment à juxtaposer les hologrammes des images bidimensionnelles dans une même image constituant l'hologramme de l'objet.

La présente invention concerne également un procédé pour produire une image tridimensionnelle à partir d'un objet virtuel défini dans un espace géométrique à trois dimensions, caractérisé en ce qu'il comprend les étapes suivantes :

produire un hologramme de l'objet selon le procédé défini ci-dessus,
reproduire physiquement l'hologramme de l'objet sur un modulateur spatial de lumière, et
éclairer le modulateur spatial de lumière afin de restituer une image tridimensionnelle de l'objet à partir de cet hologramme.

Selon un aspect de l'invention, l'étape d'éclairer le modulateur spatial de lumière consiste à éclairer celui-ci alternativement par trois ondes optiques respectivement représentatives des couleurs Rouge, Vert et Bleu en synchronisme avec la reproduction par le modulateur spatial de lumière d'une séquence d'hologrammes de l'objet produits selon le procédé de production d'hologrammes défini ci-dessus et correspondant chacun à l'une desdites trois couleurs, de sorte qu'une image tridimensionnelle en couleur de l'objet soit restituée.

Egalement, une séquence d'hologrammes peut être reproduite physiquement par le modulateur spatial de lumière, chacun des hologrammes de cette séquence étant produit selon le procédé de production d'hologrammes défini ci-dessus, de sorte qu'après l'étape d'éclairer le modulateur spatial de lumière, des images animées en trois dimensions de l'objet puissent être restituées.

La présente invention concerne également un dispositif pour produire un hologramme à partir d'un objet virtuel défini dans un espace géométrique à trois dimensions, caractérisé en ce qu'il comprend :

un moyen pour mémoriser l'objet virtuel défini dans l'espace géométrique à trois dimensions,
un premier moyen de calcul pour produire un ensemble d'images bidimensionnelles représentatives de l'objet selon des points de vue respectifs différents dans l'espace à trois dimensions,
un second moyen de calcul pour produire des hologrammes correspondant respectivement aux images bidimensionnelles, et
un moyen de combinaison pour combiner lesdits hologrammes de manière à former un hologramme de l'objet.

Le premier moyen de calcul peut comprendre un moyen de calcul de projection pour calculer la projection d'images de l'objet, vues depuis respectivement les points d'une matrice de points située dans un premier plan géométrique disjoint de l'objet, sur un second plan géométrique qui est de préférence intercalé entre l'objet et le premier plan et parallèle au premier plan dans l'espace géométrique à trois dimensions.

Le moyen de calcul de projection peut comprendre un moyen pour calculer la projection, pour chaque point de la matrice, de points de l'objet sur le second plan suivant des droites respectives passant par lesdits points de l'objet et ledit chaque point de la matrice.

Avantageusement, le second moyen de calcul comprend :

un moyen de transformation pour transformer une image bidimensionnelle donnée définie par une fonction réelle en une image complexe définie par une fonction complexe,
un moyen pour suréchantillonner l'image complexe,
un moyen de simulation pour simuler la production d'une image diffractée résultant de la diffraction d'une onde optique par l'image complexe suréchantillonnée,
un moyen pour additionner un champ complexe représentatif d'une onde optique de référence à l'image diffractée résultante, et
un moyen pour coder des valeurs prises par l'amplitude de la somme dudit champ complexe et de l'image diffractée afin de produire l'hologramme associé à l'image bidimensionnelle donnée.

Le moyen de transformation peut comprendre :

un moyen pour déterminer des valeurs d'amplitude dépendant chacune de la racine carrée d'une valeur correspondante prise par la fonction réelle, et
un moyen pour associer une phase à chacune des valeurs d'amplitude de sorte qu'une valeur d'amplitude et une valeur de phase soient définies pour chaque point de l'image complexe.

Le moyen de simulation peut comprendre un moyen pour calculer l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, et transformation d'ondelettes adaptatives.

Plus particulièrement, le moyen de simulation peut comprendre un moyen pour calculer un produit de convolution, associé à l'image complexe suréchantillonnée, de deux composantes, en appliquant la transformation inverse de ladite transformation complexe au produit des transformations complexes respectives desdites deux composantes.

Le moyen de combinaison peut comprendre un moyen pour juxtaposer les hologrammes des images bidimensionnelles dans une même image constituant l'hologramme de l'objet.

La présente invention concerne également un dispositif pour produire une image tridimensionnelle à partir d'un objet virtuel défini dans un espace géométrique à trois dimensions, caractérisé en ce qu'il comprend :

un dispositif tel que défini ci-dessus pour produire un hologramme de l'objet,
un modulateur spatial de lumière pour reproduire physiquement l'hologramme de l'objet, et
une source lumineuse pour éclairer le modulateur spatial de lumière afin de restituer une image tridimensionnelle de l'objet à partir de cet hologramme.

Le modulateur spatial de lumière comprend un écran à cristaux liquides ayant un pas de pixels (en anglais : pitch) inférieur à 10 µm et de préférence compris entre 1 µm et 2 µm suivant au moins deux directions distinctes. Par « pas de pixels », on entend la période de reproduction des pixels suivant une direction donnée, qui correspond, pour chaque pixel, à la somme de la dimension du pixel suivant la direction donnée et de la distance séparant ce pixel d'un pixel adjacent suivant cette même direction. La distance entre deux pixels est choisie pour être la plus petite possible et de préférence sensiblement nulle. Les deux directions distinctes précitées correspondent respectivement à des lignes et colonnes de pixels sur l'écran à cristaux liquides.

Ledit dispositif pour produire un hologramme de l'objet, le modulateur spatial de lumière et la source lumineuse peuvent être situés sur un même site. En variante, le dispositif pour produire un hologramme de l'objet est situé sur un premier site, et le modulateur spatial de lumière et la source lumineuse sont situés sur un second site, les premier et second sites étant distants l'un de l'autre.

D'autres avantages de la présente invention apparaîtront à la lecture de la description détaillée suivante en référence aux dessins annexés dans lesquels :

- la figure 1 est un schéma-bloc d'un dispositif holographique selon un premier mode de réalisation de l'invention ;
- la figure 2 est un schéma de la structure d'un modulateur spatial de lumière (SLM) utilisé dans le dispositif de la figure 1 ;
- la figure 3 est un organigramme d'un algorithme mis en oeuvre dans le dispositif de la figure 1 ;
- la figure 4 est un schéma illustrant une projection d'images effectuée par l'algorithme de la figure 3 ;
- la figure 5 est un organigramme d'un algorithme de production d'un hologramme à partir d'une image bidimensionnelle, mis en oeuvre dans le dispositif de la figure 1 ;
- la figure 6 est un schéma illustrant le suréchantillonnage d'une image bidimensionnelle tel qu'il est mis en oeuvre par l'algorithme représenté à la figure 5 ;
- la figure 7 illustre la production d'un hologramme à partir d'une image bidimensionnelle ;
- la figure 8 est un schéma montrant un hologramme numérique généré selon l'algorithme représenté à la figure 3 ; et
- la figure 9 est un schéma-bloc d'un dispositif holographique selon un second mode de réalisation de l'invention.

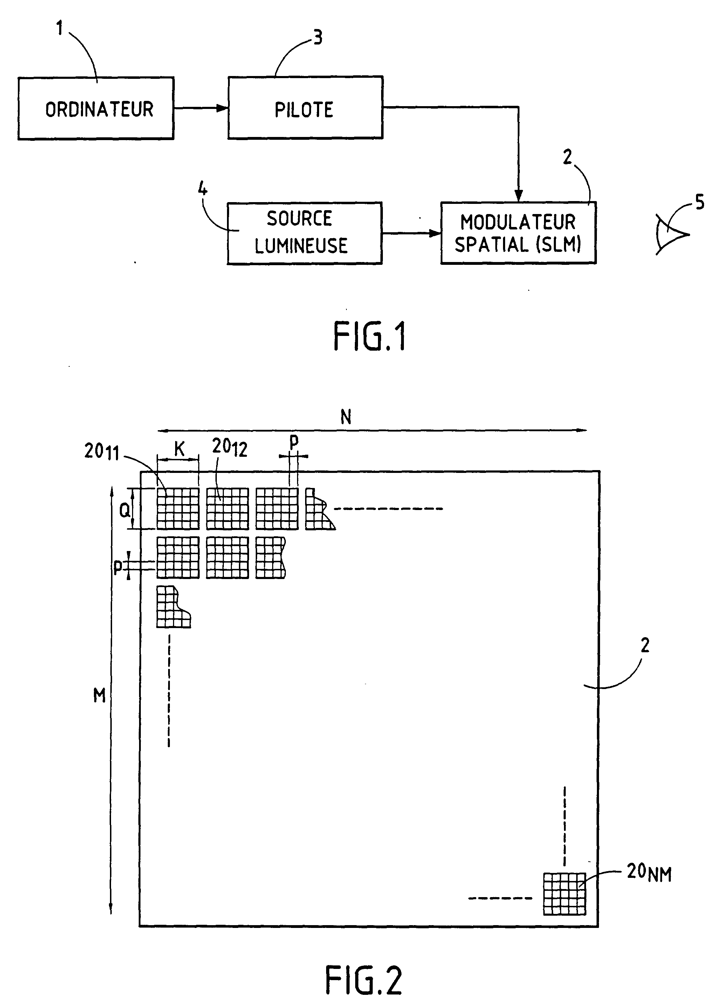

En référence à la figure 1, un dispositif holographique selon un premier mode de réalisation de l'invention comprend un ordinateur 1, un modulateur spatial de lumière 2 (en anglais : Spatial Light Modulator), une interface pilote 3 pour commander le modulateur spatial de lumière 2 en fonction de signaux émis par l'ordinateur 1, et une source lumineuse 4.

L'ordinateur 1 contient dans une mémoire (non représentée) un objet tridimensionnel virtuel. Cet objet virtuel est défini par exemple par un ensemble de triplets de coordonnées dans un repère de l'espace à trois dimensions, chaque triplet de coordonnées correspondant à un point sur la surface externe de l'objet. L'objet virtuel est typiquement obtenu de manière classique par conception assistée par ordinateur (CAO), ou par toute autre méthode de synthèse volumique d'images, telle que la tomographie, ou une méthode de radiosité ou de lancer de rayons associée à un modéleur géométrique tridimensionnel.

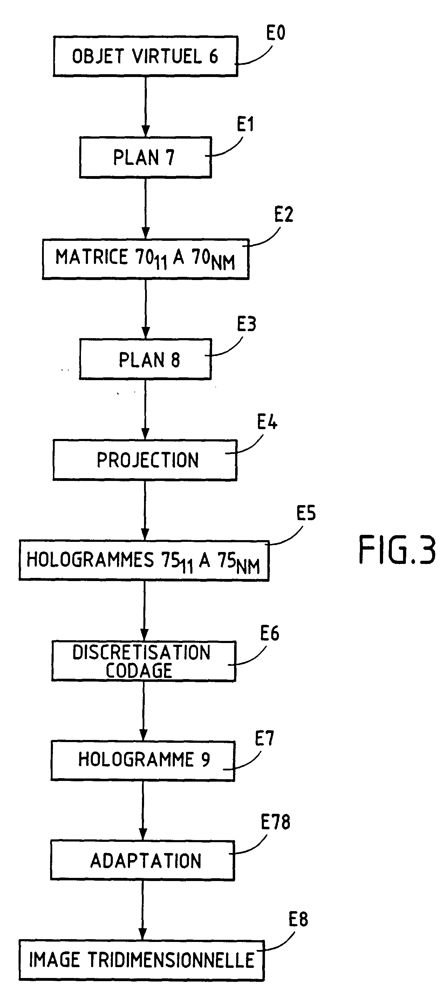

L'ordinateur 1 contient également dans une mémoire un algorithme de génération d'hologramme, qui sera décrit plus loin en référence aux figures 3 à 5, pour produire un hologramme numérique correspondant à l'objet virtuel. L'ordinateur 1 commande alors le modulateur spatial 2 par l'intermédiaire du pilote 3 de sorte que l'hologramme généré numériquement par l'ordinateur 1 soit reproduit physiquement par le modulateur spatial 2.

La source lumineuse 4 est une source capable d'émettre de la lumière cohérente à une longueur d'onde prédéterminée λ, telle qu'un laser ou une source de lumière blanche associée à un filtre dichroïque ou interférentiel. La longueur de cohérence de la source lumineuse 4 est en outre prédéfinie en fonction des dimensions caractéristiques du modulateur spatial de lumière 2, d'une manière connue de l'homme du métier. Dans le mode de réalisation montré à la figure 1, la source lumineuse 4 est disposée de façon à éclairer le modulateur spatial 2 en transmission.

Le modulateur spatial 2 comprend un réseau de cellules diffractives commandées pour reproduire physiquement l'hologramme numérique précité et qui diffractent la lumière émise par la source lumineuse 4 afin qu'un observateur 5 placé devant le modulateur spatial 2 puisse observer, grâce à la reconstruction holographique, une image tridimensionnelle de l'objet virtuel. Le modulateur spatial de lumière 2, dit également « écran holographique » dans l'application particulière de l'holographie, est typiquement un écran à cristaux liquides dont les états sont transparents ou opaques et dont le pas p des pixels (en anglais : pitch) suivant les directions horizontale et verticale est inférieur à 10 µm et de préférence compris entre 1 µm et 2 µm. Le pas p des pixels est défini, suivant la direction horizontale ou verticale, comme la somme de la dimension d'un pixel donné suivant cette direction et de la distance entre le pixel donné et un pixel adjacent suivant cette même direction.

La figure 2 montre schématiquement la structure d'un écran à cristaux liquides utilisé dans la présente invention comme modulateur spatial 2. L'écran à cristaux liquides 2 est subdivisé en un nombre entier prédéterminé NxM d'écrans élémentaires $20_{11}$ à $20_{NM}$ agencés selon une matrice, chaque écran élémentaire comprenant un nombre entier prédéterminé KxQ de pixels, ou cellules diffractives élémentaires. Typiquement, les dimensions de chaque écran élémentaire sont de 1mm x 1mm. Dans la réalisation montrée à la figure 2, la distance entre deux pixels adjacents est quasi-nulle, de sorte que le pas p des pixels est égal à la longueur des pixels suivant la direction horizontale ou verticale. L'intérêt de cette structure d'écran apparaîtra plus clairement à la lecture de la suite de la description.

Les figures 3 à 5 illustrent le procédé conforme à l'invention. En particulier, la figure 3 montre un algorithme mis en oeuvre en partie dans l'ordinateur 1 de la figure 1.

A une étape préliminaire E0 de l'algorithme, un objet, ou une scène, virtuel en trois dimensions 6 est stocké dans une mémoire de l'ordinateur 1. L'objet virtuel 6 est défini, comme décrit précédemment, par les coordonnées dans un repère tridimensionnel (O,x,y,z) de points 60 constituant sa surface externe.

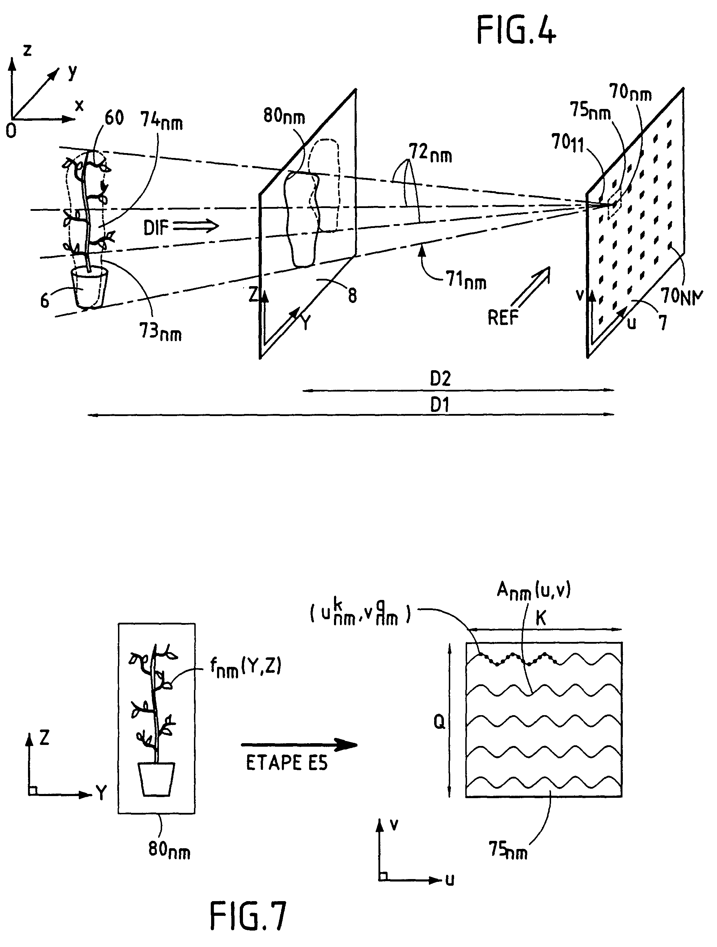

A une première étape E1, un premier plan géométrique 7, dit également plan de calcul d'hologramme, est défini. Le premier plan 7 est disposé, dans le repère tridimensionnel (O,x,y,z), à une distance non nulle D1 de l'objet virtuel 6 de sorte que le plan 7 et l'objet 6 soient complètement disjoints, comme montré sur la figure 4.

A une étape suivante E2, une partie du premier plan 7 est échantillonnée de manière à définir une matrice constituée par NxM points d'échantillonnage $70_{11}$ à $70_{NM}$ régulièrement répartis. Chaque point d'échantillonnage $70_{nm}$, où n et m sont des entiers respectivement compris entre 1 et N, et 1 et M, voit l'objet virtuel 6 selon un point de vue respectif. L'image de l'objet 6 vue par un point d'échantillonnage donné $70_{nm}$ est inscrite dans un cône $71_{nm}$ de sommet le point donné $70_{nm}$, de génératrices les demi-droites $72_{nm}$ ayant pour origine le point donné $70_{nm}$ et qui s'appuient sur le contour apparent $73_{nm}$ de l'objet 6 vu depuis le point donné $70_{nm}$, et de base la surface $74_{nm}$ délimitée par le contour apparent $73_{nm}$. Sur la figure 4, un seul cône $71_{nm}$ a été représenté pour une meilleure clarté du dessin.

A une étape E3 de l'algorithme, un second plan 8, dit également plan de projection, est défini dans le repère tridimensionnel (O,x,y,z). Le second plan 8 est disjoint du premier plan 7 et est de préférence intercalé entre l'objet virtuel 6 et le premier plan 7, à une distance D2 non nulle du premier plan 7, et parallèle au premier plan 7. La distance D2 entre les plans 7 et 8 correspond en pratique à la distance, mesurée à partir du modulateur spatial 2, à laquelle l'image en trois dimensions de l'objet est restituée et perçue par l'observateur 5 (Cf. figure 1).

A une étape E4, l'image de l'objet virtuel 6 vue depuis chaque point d'échantillonnage $70_{nm}$ est projetée sur le second plan 8 selon une projection de type conique, de sorte que l'image projetée bidimensionnelle résultante $80_{nm}$ soit inscrite dans le cône $71_{nm}$ comme montré sur la figure 4. Plus précisément, pour chaque point d'échantillonnage $70_{nm}$ sur le plan 7, chaque point 60 de la surface externe de l'objet virtuel 6 en visibilité du point d'échantillonnage $70_{nm}$ est projeté sur le second plan 8 suivant la droite passant par le point 60 et le point d'échantillonnage $70_{nm}$ et en direction du point d'échantillonnage $70_{nm}$. L'image projetée bidimensionnelle $80_{nm}$ est définie numériquement par une distribution d'intensités $f_{nm}(Y,Z)$, c'est-à-dire à chaque point, ou pixel, de l'image $80_{nm}$, repéré par ses coordonnées (Y, Z) dans le plan de projection 8, est associée une valeur d'intensité, qui est un nombre réel.

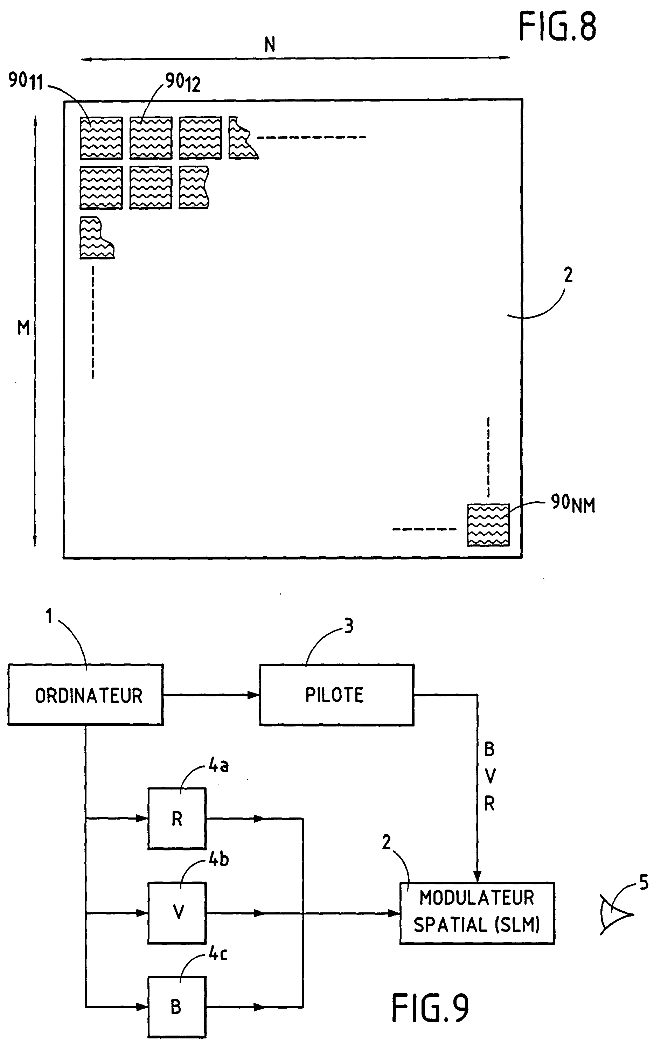

Une fois que les NxM images projetées $80_{11}$ à $80_{NM}$ correspondant respectivement aux NxM points d'échantillonnage $70_{11}$ à $70_{NM}$ ont été déterminées dans le second plan 8, des hologrammes $75_{11}$ à $75_{NM}$, dont un est schématiquement illustré aux figures 4 et 7, sont produits numériquement respectivement pour ces images projetées à une étape suivante E5. Le calcul de l'hologramme $75_{nm}$ pour une image projetée bidimensionnelle donnée $80_{nm}$ peut être réalisé selon une technique connue basée sur la transformation de Fourier. Une description d'une telle technique peut être trouvée dans l'article de S. Michelin, D. Arquès et J.C. Grossetie, intitulé « Fourier-transform computer generated hologram : a variation on the off-axis principle » publié dans SPIE conferences 1994, Practical Holography VIII, pages 249-254, ou dans l'article de Olof Bryngdahl et Franck Wyrowski, sous la responsabilité de E. Wolf, intitulé « Digital Holography-Computer-Generated Holograms », publié dans Progress in Optics, volume XXVIII par Elsevier Science Publishers B.V., 1990. Cette technique consiste, de manière générale, à simuler la production analogique d'un hologramme, en appliquant une suite de transformations de Fourier à un produit de convolution associé à une image bidimensionnelle, en additionnant un champ complexe représentant une onde optique de référence à la suite de transformées de Fourier ainsi obtenue, puis en extrayant l'information d'amplitude contenue dans la somme du champ complexe et de la suite de transformées de Fourier.

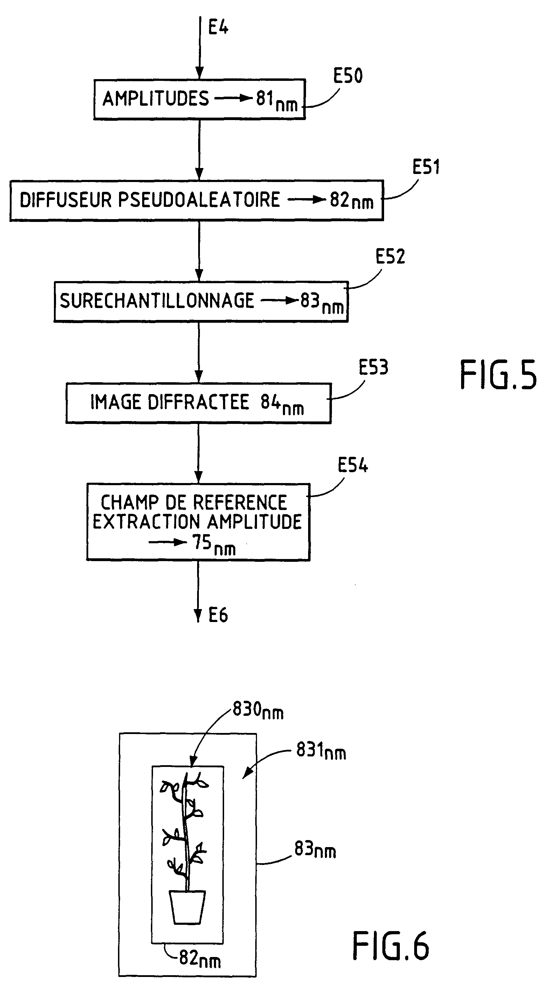

La présente invention utilise un algorithme amélioré par rapport aux méthodes conventionnelles, pour mettre en oeuvre l'étape E5. Cet algorithme est illustré à la figure 5.

A une étape E50, l'image bidimensionnelle projetée $80_{nm}$, décrite par la distribution d'intensités précitée $f_{nm}(Y,Z)$, est transformée en une image bidimensionnelle transformée $81_{nm}$ qui est décrite par une distribution d'amplitudes, en calculant pour chaque point de l'image $80_{nm}$ la racine carrée de la valeur d'intensité correspondante.

A une étape suivante E51, un diffuseur dit « pseudoaléatoire » est généré numériquement. Ce diffuseur consiste en une « image» ayant le même nombre de pixels que l'image bidimensionnelle projetée $80_{nm}$, et dont chaque pixel a une valeur d'intensité égale à 1 et une phase aléatoire. Chaque phase du diffuseur est alors associée à un pixel correspondant de l'image bidimensionnelle transformée $81_{nm}$, pour transformer l'image $81_{nm}$ en une image dite « complexe » $82_{nm}$ dans laquelle un nombre complexe défini par une valeur d'amplitude et une valeur de phase est déterminé pour chaque pixel. Le diffuseur pseudoaléatoire permet d'éviter que l'hologramme résultant $75_{nm}$ présente de trop grandes disparités de niveaux d'amplitude en moyennant les valeurs d'amplitude de cet hologramme.

A une étape E52, l'image complexe $82_{nm}$ obtenue à l'étape E51 est suréchantillonnée, c'est-à-dire cette image est incluse dans une image plus grande, comme montré à la figure 6. Une image $83_{nm}$ est ainsi formée, constituée dans une partie centrale $830_{nm}$ par l'image complexe $82_{nm}$ et dans une partie périphérique complémentaire $831_{nm}$ de pixels dont l'amplitude est choisie arbitrairement, par exemple égale à 0. Ce suréchantillonnage de l'image complexe $82_{nm}$ permet d'augmenter le nombre de pixels de l'hologramme résultant $75_{nm}$ et ainsi de restituer une image tridimensionnelle de l'objet 6 avec une plus grande résolution.

A une étape E53, l'image diffractée produite sur le plan de calcul d'hologramme 7 lorsque l'image bidimensionnelle projetée $80_{nm}$ est éclairée par une onde cohérente fictive DIF de longueur d'onde $\lambda$ (Cf. figure 4) est simulée numériquement. L'étape E53 consiste à calculer un produit de convolution associé à l'image complexe suréchantillonnée $83_{nm}$. Ce produit de convolution est conforme à la théorie de la diffraction scalaire. A titre d'exemple, selon une formulation de la diffraction scalaire de type Rayleigh-Sommerfeld, les deux composantes du produit de convolution peuvent correspondre respectivement à un champ complexe représentatif de l'image complexe suréchantillonnée $83_{nm}$ et à un champ complexe représentatif d'une onde optique sphérique de longueur d'onde $\lambda$. D'autres types de produits de convolution pour le calcul d'une image diffractée sont toutefois connus de l'homme du métier. Le produit de convolution calculé à l'étape E53 utilise comme paramètres notamment la distance D2 précitée et la longueur d'onde d'émission $\lambda$ de la source lumineuse 4.

Le calcul du produit de convolution est réalisé, selon l'invention, en appliquant une transformation complexe, dite également transformation rapide complexe, aux deux composantes du produit de convolution, en calculant le produit des transformées rapides complexes résultantes, puis en appliquant la transformation rapide complexe inverse de ladite transformation rapide complexe au produit précité des transformées rapides complexes.

De manière plus explicite, si CONV désigne le produit de convolution, C1 et C2 les deux composantes de celui-ci, et T la transformation rapide complexe, alors le produit de convolution s'écrit :

$$CONV=C1\otimes C2=T^{-1}T(C1\otimes C2)$$

$$CONV =T^{-1}(T(C1)T(C2)).$$

Par transformation rapide complexe, on entend ici une transformation mathématique compatible avec la théorie de la diffraction optique scalaire, c'est-à-dire dont les fonctions transformées résultantes satisfont aux équations conventionnelles de la diffraction scalaire. La transformation rapide complexe doit en outre satisfaire la propriété selon laquelle la transformée rapide complexe d'un produit de convolution de deux composantes est égal au produit des transformées rapides complexes respectives desdites deux composantes. Des transformations rapides complexes qui remplissent les conditions ci-dessus sont la transformation de Fourier, la transformation de polynômes orthogonaux, la transformation de Paley, la transformation de Hadamar, la transformation de Walsh, la transformation de Hankel, la transformation de Karhunen-Loeve, la transformation d'ondelettes discrètes en multirésolution, et la transformation d'ondelettes adaptatives. D'autres transformations rapides complexes appropriées sont celles résultant d'une composition entre au moins deux des transformations précitées, telles qu'une composition entre la transformation de Walsh et la transformation d'Hadamar. L'application d'une composition de deux transformations données T1 et T2 à une image quelconque I est définie, de façon mathématiquement classique, par (T1∘ T2)(I) = T1(T2(I)).

Chacune des transformations rapides complexes précitées peut être utilisée dans un cas spécifique. En particulier, le choix de la transformation rapide complexe est effectué en fonction de la distance D2, par rapport au modulateur spatial de lumière 2, à laquelle l'on souhaite restituer l'image optique en trois dimensions de l'objet 6. Pour une grande distance D2 une transformation de Fourier est appropriée. Pour une distance D2 plus faible une transformation de Walsh convient mieux. Egalement, il a été trouvé que l'utilisation parmi les transformations rapides complexes susmentionnées d'une transformation autre que la transformation de Fourier donne de meilleurs résultats en termes de qualité de l'hologramme $75_{nm}$ que ceux obtenus par la transformation de Fourier.

Il est par ailleurs à noter que grâce à la transformation de l'image bidimensionnelle projetée $80_{nm}$ en une image complexe $82_{nm}$, le calcul, à l'étape E53, du produit de convolution associé à l'image $80_{nm}$ est effectué de manière plus pratique que dans la technique antérieure, puisque la transformation rapide complexe est appliquée directement sur une image $83_{nm}$ décrite par une fonction complexe et non pas sur une image décrite par une fonction réelle.

A l'issue de l'étape E53, l'image diffractée $84_{nm}$ est décrite par un champ complexe constitué par un ensemble de nombres complexes dont chacun est associé à un point de l'image $84_{nm}$. Chacun de ces nombres complexes dépend par ailleurs de l'image $83_{nm}$ prise dans son ensemble.

A une étape suivante E54, un champ complexe simulant une onde optique de référence REF de longueur d'onde λ, dirigée vers le plan de calcul d'hologramme 7, est additionné, dans le plan 7, au champ complexe représentatif de l'image diffractée $84_{nm}$, puis l'information d'amplitude contenue dans le champ complexe résultant est extraite afin de produire un champ d'interférences. L'addition des deux champs complexes précités est effectuée en additionnant, en chaque point de l'image diffractée $84_{nm}$, le nombre complexe associé à ce point et la valeur, en ce même point, du champ complexe représentatif de l'onde de référence REF. Ledit champ d'interférences constitue l'hologramme $75_{nm}$ de l'image projetée bidimensionnelle $80_{nm}$.

Selon une variante de l'algorithme de la figure 5, les étapes de production de l'image complexe E50 et E51 et/ou l'étape de suréchantillonnage E52 sont supprimées. Selon une autre variante, l'étape de suréchantillonnage E52 est mise en oeuvre avant les étapes de production de l'image complexe E50 et E51.

L'hologramme $75_{nm}$ d'une image bidimensionnelle donnée $80_{nm}$ obtenu à l'étape E5 est un champ, ou réseau, diffractif, qui est calculé pour une longueur d'onde particulière, à savoir la longueur d'onde d'émission λ de la source lumineuse 4. Cet hologramme, qui se présente à l'étape E5 sous forme virtuelle, c'est-à-dire est représenté dans l'ordinateur 1 par des données numériques, est tel que, s'il est reproduit physiquement par un écran holographique, un éclairage dudit écran holographique par une source laser émettant à la longueur d'onde précitée λ permette de restituer, dans un ordre de diffraction donné, l'image bidimensionnelle initiale $80_{nm}$.

Chaque hologramme $75_{nm}$ obtenu à l'étape E5 est décrit numériquement dans l'ordinateur 1 par une fonction bidimensionnelle d'amplitudes $A_{nm}(u,v)$, où (u, v) désignent des coordonnées dans le plan de calcul d'hologramme 7 qui correspondent par exemple à des fréquences spatiales d'image dans le cas où la transformation rapide complexe choisie à l'étape E53 est une transformation de Fourier. La fonction bidimensionnelle d'amplitudes $A_{nm}(u,v)$ est déduite, comme expliqué ci-dessus, de la fonction bidimensionnelle d'intensités $f_{nm}$ (Y,Z) décrivant l'image bidimensionnelle projetée $80_{nm}$ correspondante. En pratique, la fonction $A_{nm}(u,v)$ associée à un hologramme donné $75_{nm}$ est calculée seulement pour une suite de points discrets $(u,v) = (u_{nm}^{k}, v_{nm}^{q})$, où k et q sont des entiers respectivement compris 1 et K, et 1 et Q (Cf. figure 7). Toutefois, les valeurs que prennent les fonctions $A_{nm}(u,v)$ peuvent s'étaler continûment entre une valeur d'amplitude minimale et une valeur d'amplitude maximale.

En référence de nouveau à la figure 3, à une étape E6 de l'algorithme, les valeurs prises par les fonctions $A_{nm}(u,v)$ sont discrétisées et codées, c'est-à-dire à chaque valeur de ces fonctions est associée une valeur discrète qui est codée numériquement par exemple sur 8 bits. A chaque couple de points discrets $(u_{nm}^{k}, v_{nm}^{q})$ correspond alors une valeur d'amplitude discrète, représentative d'un niveau de gris, parmi 256 valeurs. Les amplitudes $A_{nm}(u,v)$ peuvent également être discrétisées plus simplement en associant, pour chaque valeur d'amplitude de $A_{nm}(u,v)$, la valeur discrète « 0» si ladite valeur d'amplitude est inférieure à un seuil prédéterminé, ou la valeur discrète « 1 » si ladite valeur d'amplitude est supérieure au seuil prédéterminé.

A une étape suivante E7, les hologrammes discrétisés et codés, déterminés à l'étape E6, désignés par $90_{11}$ à $90_{NM}$, sont juxtaposés pour former une image numérique 9 qui est représentée à la figure 8. Les hologrammes $90_{11}$ à $90_{NM}$ sont agencés dans l'image numérique 9 selon la même configuration que les points d'échantillonnage $70_{11}$ à $70_{NM}$ correspondants sur le premier plan 7. L'image numérique 9 est ainsi représentative d'un hologramme de l'objet virtuel 6.

A une étape E8, l'image numérique, ou hologramme, 9 est transmis par l'ordinateur 1 au modulateur spatial de lumière 2 via l'interface pilote 3, pour être reproduit physiquement par le modulateur spatial de lumière 2. Plus particulièrement, chaque écran élémentaire $20_{nm}$ affiche l'hologramme $90_{nm}$ correspondant. En éclairant le modulateur spatial 2 par la source lumineuse 4, une image optique réelle ou virtuelle en trois dimensions de l'objet 6 peut alors être restituée par diffraction de la lumière émise par la source 4 à travers le modulateur spatial 2.

La description ci-dessus a été produite pour un nombre de pixels, ou cellules diffractives, de l'image numérique 9 égal au nombre de pixels de l'écran holographique 2, c'est-à-dire égal à NxMxKxQ, et pour un agencement des pixels identique dans l'image numérique 9 et l'écran 2, de sorte que l'image numérique 9 est parfaitement adaptée à la structure de l'écran 2. Toutefois, si le nombre et/ou l'agencement des pixels sont différents dans l'image 9 et l'écran 2, une étape d'adaptation E78 est prévue avant l'étape de restitution d'image tridimensionnelle E8 pour adapter l'image numérique 9 à la structure de l'écran holographique 2.

Comme il a déjà été indiqué, les hologrammes $90_{11}$ à $90_{NM}$ des images bidimensionnelles $80_{11}$ à $80_{NM}$,

et donc l'hologramme 9 de l'objet 6, sont calculés pour la longueur d'onde d'émission de la source lumineuse 4. L'image tridimensionnelle de l'objet virtuel 6 est donc restituée par l'écran 2 dans la couleur correspondant à cette longueur d'onde.

La figure 9 montre un second mode de réalisation du dispositif holographique conforme à l'invention. Cette seconde réalisation diffère de la première montrée à la figure 1 en ce que la source lumineuse 4 est remplacée par trois sources lumineuses 4a, 4b et 4c émettant respectivement de la lumière cohérente rouge, verte et bleue. Les sources lumineuses 4a, 4b et 4c sont commandées par l'ordinateur 1 via une interface spécifique (non représentée) de sorte que celles-ci émettent de la lumière alternativement en synchronisme avec la reproduction par le modulateur spatial 2 d'une séquence d'hologrammes calculés par l'ordinateur 1 et correspondant chacun à l'une des couleurs rouge, vert et bleu (RVB). Ainsi, chaque source lumineuse 4a, 4b et 4c éclaire le modulateur spatial lorsqu'un hologramme associé respectivement à la couleur rouge, vert et bleu est affiché par le modulateur spatial de lumière 2. Par cette technique de multiplexage temporel, il est possible de restituer une image tridimensionnelle en couleurs de l'objet virtuel 6.

Par ailleurs, l'invention n'est pas limitée à l'éclairage du modulateur spatial 2 en transmission. Ainsi, dans les modes de réalisation montrés aux figures 1 et 9, les sources lumineuses 4, et 4a, 4b, 4c respectivement peuvent être disposées du même côté que l'observateur 5 par rapport au modulateur spatial 2, de manière à diffracter de la lumière en réflexion sur le modulateur spatial 2.

Le modulateur spatial de lumière 2 utilisé dans la présente invention est capable de reproduire des hologrammes en temps réel. Ainsi, le procédé décrit en référence aux figures 3 à 5 peut être mis en oeuvre pour des séquences d'images en trois dimensions de façon à restituer des images animées.

Dans les modes de réalisation montrés aux figures 1 et 9, le dispositif holographique est disposé sur un même site. Toutefois, en variante, le dispositif holographique conforme à l'invention peut être réparti en deux dispositifs distants, un premier dispositif, dit « émetteur », mettant en oeuvre les étapes numériques E0 à E7 de l'algorithme de la figure 3, c'est-à-dire produisant l'hologramme numérique 9 à partir de l'objet virtuel 6, et le second dispositif, dit « récepteur », réalisant les étapes suivantes E78 et E8. L'hologramme 9 produit par le dispositif émetteur est transmis au dispositif récepteur sous la forme d'un signal numérique par un moyen de transmission.

Selon une autre variante de l'invention, le dispositif holographique est disposé sur un seul site, mais reçoit l'objet virtuel 6 d'un dispositif émetteur distant.

## Revendications

1. Procédé pour produire un hologramme à partir d'un objet virtuel (6) défini dans un espace géométrique à trois dimensions (O,x,y,z), caractérisé en ce qu'il comprend les étapes suivantes :

   produire par calcul (E1-E4) un ensemble d'images bidimensionnelles $(80_{nm})$ représentatives de l'objet selon des points de vue respectifs différents dans l'espace à trois dimensions,
   produire par calcul (E5-E6) des hologrammes $(90_{nm})$ correspondant respectivement auxdites images bidimensionnelles, et
   combiner (E7) lesdits hologrammes $(90_{nm})$ dans une même image numérique pour former un hologramme (9) de l'objet (6).

2. Procédé conforme à la revendication 1, selon lequel l'étape de produire par calcul l'ensemble d'images bidimensionnelles comprend les étapes suivantes :

   définir (E1-E2) dans l'espace à trois dimensions une matrice de points $(70_{nm})$ située dans un premier plan géométrique (7) disjoint de l'objet (6), et
   projeter (E3-E4) les images de l'objet vues depuis respectivement les points $(70_{nm})$ de ladite matrice sur un second plan géométrique (8), qui est de préférence intercalé entre l'objet (6) et le premier plan (7) et parallèle au premier plan, les images projetées constituant lesdites images bidimensionnelles $(80_{nm})$.

3. Procédé conforme à la revendication 2, selon lequel ladite étape de projeter consiste, pour chaque point $(70_{nm})$ de la matrice, à projeter des points (60) de l'objet (6) sur le second plan (8) suivant des droites respectives passant par lesdits points de l'objet et ledit chaque point de la matrice.

4. Procédé conforme à l'une quelconque des revendications 1 à 3, selon lequel ladite étape (E5-E6) de produire par calcul les hologrammes est mise en oeuvre selon une technique utilisant la transformation de Fourier.

5. Procédé conforme à l'une quelconque des revendications 1 à 4, selon lequel lesdites images bidimensionnelles $(80_{nm})$ sont définies par des fonctions réelles respectives $(f_{nm}(Y,Z))$ et ladite étape (E5-E6) de produire par calcul les hologrammes comprend les étapes suivantes pour une image bidimensionnelle donnée $(80_{nm})$ :

   transformer (E50, E51) l'image bidimensionnelle donnée définie par la fonction réelle correspondante en une image bidimensionnelle complexe définie par une fonction complexe, suréchantillonner (E52) l'image complexe (82$_{nm}$),

simuler (E53) la production d'une image diffractée résultant de la diffraction d'une onde optique (DIF) par l'image complexe suréchantillonnée (83$_{nm}$),

additionner (E54) un champ complexe représentatif d'une onde optique de référence (REF) à l'image diffractée résultante (84$_{nm}$), et

coder (E6) des valeurs prises par l'amplitude de la somme dudit champ complexe et de l'image diffractée résultante (84$_{nm}$) afin de produire l'hologramme (90$_{nm}$) associé à ladite image bidimensionnelle donnée (80$_{nm}$).

**6.** Procédé conforme à la revendication 5, selon lequel ladite étape de transformer comprend les étapes suivantes :

déterminer (E50) des valeurs d'amplitude dépendant chacune de la racine carrée d'une valeur correspondante prise par ladite fonction réelle, et

associer (E51) une phase à chacune desdites valeurs d'amplitude de sorte qu'une valeur d'amplitude et une valeur de phase soient définies pour chaque point de l'image complexe.

**7.** Procédé conforme à la revendication 5 ou 6, selon lequel ladite étape (E53) de simuler comprend le calcul d'au moins l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant d'une composition d'au moins deux des transformations ci-dessus.

**8.** Procédé conforme à la revendication 7, selon lequel ladite étape (E53) de simuler consiste à calculer un produit de convolution, associé à l'image complexe suréchantillonnée, de deux composantes, en appliquant la transformation inverse de ladite transformation complexe au produit des transformations complexes respectives desdites deux composantes.

**9.** Procédé conforme à l'une quelconque des revendications 1 à 8, selon lequel ladite étape (E7) de combiner les hologrammes consiste notamment à juxtaposer les hologrammes (90$_{nm}$) des images bidimensionnelles (80$_{nm}$) dans une même image (9) constituant ledit hologramme (9) de l'objet (6).

**10.** Procédé pour produire une image tridimensionnelle à partir d'un objet virtuel (6) défini dans un espace géométrique à trois dimensions (O,x,y,z), caractérisé en ce qu'il comprend les étapes suivantes :

produire un hologramme (9) de l'objet (6) selon le procédé défini dans l'une quelconque des revendications 1 à 9,

reproduire (E8) physiquement ledit hologramme (9) de l'objet (6) sur un modulateur spatial de lumière (2), et

éclairer (E8) le modulateur spatial de lumière (2) afin de restituer une image tridimensionnelle de l'objet (6) à partir de cet hologramme (9).

**11.** Procédé conforme à la revendication 10, selon lequel ledit modulateur spatial de lumière (2) comprend un écran à cristaux liquides ayant un pas de pixels (pitch) inférieur à 10 μm et de préférence compris entre 1 μm et 2 μm suivant au moins deux directions distinctes.

**12.** Procédé conforme à la revendication 10 ou 11, selon lequel l'étape d'éclairer le modulateur spatial de lumière (2) consiste à éclairer celui-ci alternativement par trois ondes optiques (4a, 4b, 4c) respectivement représentatives des couleurs Rouge, Vert et Bleu (RVB) en synchronisme avec la reproduction par le modulateur spatial de lumière (2) d'une séquence d'hologrammes de l'objet produits selon ledit procédé défini dans l'une quelconque des revendications 1 à 9 et correspondant chacun à l'une desdites trois couleurs, de sorte qu'une image tridimensionnelle en couleur de l'objet (6) soit restituée.

**13.** Procédé conforme à l'une quelconque des revendications 10 à 12, selon lequel une séquence d'hologrammes est reproduite physiquement par le modulateur spatial de lumière (2), chacun des hologrammes de cette séquence étant produit selon ledit procédé défini dans l'une quelconque des revendications 1 à 9, de sorte qu'après l'étape d'éclairer le modulateur spatial de lumière, des images animées en trois dimensions de l'objet (6) soient restituées.

**14.** Dispositif pour produire un hologramme à partir d'un objet virtuel (6) défini dans un espace géométrique à trois dimensions (O,x,y,z), caractérisé en ce qu'il comprend :

un moyen (1) pour mémoriser l'objet virtuel (6) défini dans l'espace géométrique à trois dimensions (O,x,y,z),

un premier moyen de calcul (1) pour produire un ensemble d'images bidimensionnelles (80$_{nm}$) représentatives de l'objet (6) selon des points de vue respectifs différents dans l'espace à trois dimensions,

un second moyen de calcul (1) pour produire des hologrammes ($90_{nm}$) correspondant respectivement auxdites images bidimensionnelles ($80_{nm}$), et

un moyen de combinaison (1) pour combiner dans une même image numérique lesdits hologrammes ($90_{nm}$) de manière à former un hologramme (9) de l'objet (6).

15. Dispositif conforme à la revendication 14, dans lequel ledit premier moyen de calcul comprend un moyen de calcul de projection (1) pour calculer la projection d'images de l'objet (6), vues depuis respectivement les points ($70_{nm}$) d'une matrice de points située dans un premier plan géométrique (7) disjoint de l'objet (6), sur un second plan géométrique (8) qui est de préférence intercalé entre l'objet (6) et le premier plan (7) et parallèle au premier plan (7) dans l'espace géométrique à trois dimensions (O,x,y,z).

16. Dispositif conforme à la revendication 15, dans lequel ledit moyen de calcul de projection comprend un moyen (1) pour calculer la projection, pour chaque point ($70_{nm}$) de la matrice, de points (60) de l'objet (6) sur le second plan (8) suivant des droites respectives passant par lesdits points de l'objet et ledit chaque point de la matrice.

17. Dispositif conforme à l'une quelconque des revendications 14 à 16, dans lequel lesdites images bidimensionnelles ($80_{nm}$) sont définies par des fonctions réelles respectives ($f_{nm}(Y,Z)$) et le second moyen de calcul comprend :

un moyen de transformation (1) pour transformer (E50, E51) une image bidimensionnelle donnée ($80_{nm}$) définie par la fonction réelle correspondante en une image complexe définie par une fonction complexe,

un moyen (1) pour suréchantillonner (E52) l'image complexe,

un moyen de simulation (1) pour simuler (E53) la production d'une image diffractée résultant de la diffraction d'une onde optique (DIF) par l'image complexe suréchantillonnée,

un moyen (1) pour additionner (E54) un champ complexe représentatif d'une onde optique de référence (REF) à l'image diffractée résultante ($84_{nm}$), et

un moyen (1) pour coder (E6) des valeurs prises par l'amplitude de la somme dudit champ complexe et de l'image diffractée ($84_{nm}$) afin de produire l'hologramme ($90_{nm}$) associé à ladite image bidimensionnelle donnée ($80_{nm}$).

18. Dispositif conforme à la revendication 17, dans lequel ledit moyen de transformation comprend:

un moyen (1) pour déterminer (E50) des valeurs d'amplitude dépendant chacune de la racine carrée d'une valeur correspondante prise par ladite fonction réelle, et

un moyen (1) pour associer (E51) une phase à chacune desdites valeurs d'amplitude de sorte qu'une valeur d'amplitude et une valeur de phase soient définies pour chaque point de l'image complexe.

19. Dispositif conforme à la revendication 17 ou 18, dans lequel ledit moyen de simulation comprend un moyen (1) pour calculer l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant d'une composition d'au moins deux des transformations ci-dessus.

20. Dispositif conforme à la revendication 19, dans lequel ledit moyen de simulation comprend un moyen (1) pour calculer un produit de convolution, associé à l'image complexe suréchantillonnée, de deux composantes en appliquant la transformation inverse de ladite transformation complexe au produit des transformations complexes respectives desdites deux composantes.

21. Dispositif conforme à l'une quelconque des revendications 14 à 20, dans lequel le moyen de combinaison (1) comprend un moyen pour juxtaposer les hologrammes ($90_{nm}$) des images bidimensionnelles ($80_{nm}$) dans une même image (9) constituant ledit hologramme de l'objet (6).

22. Dispositif pour produire une image tridimensionnelle à partir d'un objet virtuel (6) défini dans un espace géométrique à trois dimensions (O,x,y,z), caractérisé en ce qu'il comprend :

un dispositif conforme à l'une quelconque des revendications 14 à 21 pour produire un hologramme (9) de l'objet (6),

un modulateur spatial de lumière (2) pour reproduire physiquement l'hologramme (9) de l'objet, et

une source lumineuse (4) pour éclairer le modulateur spatial de lumière (2) afin de restituer une image tridimensionnelle de l'objet (6) à partir de cet hologramme (9).

23. Dispositif conforme à la revendication 22, dans lequel ledit modulateur spatial de lumière (2) comprend un écran à cristaux liquides ayant un pas de pixels (pitch) inférieur à 10 µm et de préférence compris entre 1 µm et 2 µm suivant au moins deux directions distinctes.

24. Dispositif conforme à la revendication 22 ou 23, dans lequel ladite source lumineuse comprend trois sources lumineuses distinctes (4a, 4b, 4c) pour éclairer le modulateur spatial de lumière (2) alternativement par trois ondes optiques respectivement représentatives des couleurs Rouge, Vert et Bleu (RVB) en synchronisme avec la reproduction par le modulateur spatial de lumière (2) d'une séquence d'hologrammes de l'objet produits par ledit dispositif conforme à l'une quelconque des revendications 14 à 21 et correspondant chacun à l'une desdites trois couleurs, de sorte qu'une image tridimensionnelle en couleur de l'objet soit restituée.

25. Dispositif conforme à l'une quelconque des revendications 22 à 24, dans lequel ledit dispositif conforme à l'une quelconque des revendications 14 à 21 est situé sur un premier site, et le modulateur spatial de lumière (2) et la source lumineuse (4) sont situés sur un second site, les premier et second sites étant distants l'un de l'autre.

**Patentansprüche**

1. Verfahren zum Erzeugen eines Hologramms von einem virtuellen Objekt (6), das in einem dreidimensionalen geometrischen Raum (O,x,y,z) definiert ist,
gekennzeichnet durch folgende Schritte:

   durch Rechnung (E1-E4) erfolgendes Erzeugen einer Menge zweidimensionaler Bilder ($80_{nm}$), repräsentativ für das Objekt entsprechend den jeweiligen unterschiedlichen Projektionszentren in dem dreidimensionalen Raum,

   durch Rechnung (E5-E6) erfolgendes Erzeugen von Hologrammen ($90_{nm}$), die den zweidimensionalen Bildern entsprechen, und

   Kombinieren (E7) der Hologramme ($90_{nm}$) in einem einzigen numerischen Bild, um ein Hologramm (9) des Objekts (6) zu bilden.

2. Verfahren nach Anspruch 1,
bei dem der Schritt des durch Rechnung erfolgenden Erzeugens einer Menge von zweidimensionalen Bildern folgende Schritte beinhaltet:

   in dem dreidimensionalen Raum wird eine Punktmatrix ($70_{nm}$) definiert (E1-E2), die in einer ersten, bezüglich des Objekts (6) disjunkten geometrischen Ebene (7) liegt, und

   Projizieren (E3-E4) der von den jeweiligen Punkten ($70_{nm}$) der Matrix betrachteten Bilder des Objekts auf eine zweite geometrische Ebene (8), die vorzugsweise zwischen das Objekt (6) und die erste Ebene (7) eingefügt ist und parallel zu der ersten Ebene verläuft, wobei die projizierten Bilder die erwähnten zweidimensionalen Bilder ($8_{nm}$) darstellen.

3. Verfahren nach Anspruch 2,
bei dem der Schritt des Projizierens für jeden Punkt ($70_{nm}$) der Matrix darin besteht, Punkte (60) des Objekts (6) auf die zweite Ebene (8) entlang Geraden zu projizieren, die durch die Objektpunkte und den jeweiligen Punkt sämtlicher Punkte der Matrix laufen.

4. Verfahren nach einem der Ansprüche 1 bis 3,
bei dem der Schritt (E5-E6) des durch Rechnung erfolgenden Erzeugens der Hologramme mittels einer Methode ausgeführt wird, die von der Fourier-Transformation Gebrauch macht.

5. Verfahren nach einem der Ansprüche 1 bis 4,
bei dem die zweidimensionalen Bilder ($80_{nm}$) jeweils durch reelle Funktionen ($f_{nm}(Y,Z)$) definiert sind und der Schritt (E5-E6) des durch Rechnung erfolgenden Erzeugens der Hologramme folgende Schritte für ein gegebenes zweidimensionales Bild ($80_{nm}$) aufweist:

   Transformieren (E50, E51) des gegebenen zweidimensionalen Bildes, welches durch die entsprechende reelle Funktion definiert wird, in ein durch eine komplexe Funktion definiertes komplexes zweidimensionales Bild,

   Überabtasten (E52) des komplexen Bildes ($82_{nm}$)

   Simulieren (E53) der Erzeugung eines Beugungsbildes, resultierend aus der Beugung einer optischen Welle (DIF) durch das überabgetastete komplexe Bild ($83_{nm}$),

   Addieren (E54) eines für eine optische Referenzwelle (REF) repräsentativen komplexen Feldes auf das resultierende Beugungsbild ($84_{nm}$), und

   Kodieren (E6) der Werte, die erhalten werden durch die Amplitude der Summe des komplexen Feldes und des resultierenden Beugungsbildes ($84_{nm}$), um das zu dem gegebenen zweidimensionalen Bild ($80_{nm}$) gehörige Hologramm ($90_{nm}$) zu erzeugen.

6. Verfahren nach Anspruch 5,

bei dem der Transformationsschritt folgende Schritte beinhaltet:

Bestimmen (E50) von Amplitudenwerten jeweils abhängig von der Quadratwurzel eines durch die reelle Funktion gegebenen entsprechenden Werts, und

Zuordnen (E51) einer Phase zu jedem der Amplitudenwerte derart, daß für jeden Punkt des komplexen Bildes ein Amplitudenwert und ein Phasenwert definiert sind.

**7.** Verfahren nach Anspruch 5 oder 6,
bei dem der Schritt (E53) des Simulierens die Berechnung von zumindest einer der folgenden komplexen Transformationen aufweist: Fourier-Transformation, Walsh-Transformation, Hankel-Transformation, Transformation orthogonaler Polynome, Hadamar-Transformation, Karhunen-Loeve-Transformation, Transformation diskreter kleiner Wellen in Mehrfachauflösung, Transformation adaptiver kleiner Wellen und Transformation, welche sich aus einer Zusammensetzung von mindestens zwei der vorgenannten Transformationen ergibt.

**8.** Verfahren nach Anspruch 7,
bei dem der Schritt (E53) des Simulierens aus der Berechnung eines zu dem überabgetasteten komplexen Bild gehörigen Faltungsprodukts aus zwei Komponenten besteht, wozu die zu der komplexen Transformation inverse Transformation auf das Produkt der komplexen Transformationen der beiden Komponenten angewendet wird.

**9.** Verfahren nach einem der Ansprüche 1 bis 8,
bei dem der Schritt (E7) des Kombinierens der Hologramme insbesondere aus der Nebeneinanderstellung der Hologramme ($90_{nm}$) der zweidimensionalen Bilder ($80_{nm}$) in demselben Bild (9), welches das Hologramm (9) des Objekts (6) bildet, besteht.

**10.** Verfahren zum Erzeugen eines dreidimensionalen Bildes von einem virtuellen Objekt (6), das in einem dreidimensionalen geometrischen Raum (O,x,y,z) definiert ist,
gekennzeichnet durch folgende Schritte:

Erzeugen eines Hologramms (9) des Objekts (6) gemäß dem Verfahren nach einem der Ansprüche 1 bis 9,

physisches Reproduzieren (E8) des Hologramms (9) des Objekts (6) auf einem räumlichen Lichtmodulator (2), und

Erleuchten (E8) des räumlichen Lichtmodulators (2), um ein dreidimensionales Bild des Objekts (6) aus diesem Hologramm (9) wiederzugewinnen.

**11.** Verfahren nach Anspruch 10,
bei dem der räumliche Lichtmodulator (2) einen Flüssigkristallbildschirm aufweist, der einen Pixel-Mittenabstand unter 10 μm und vorzugsweise zwischen 1 μm und 2 μm in mindestens zwei verschiedenen Richtungen aufweist.

**12.** Verfahren nach Anspruch 10 oder 11,
bei dem der Schritt des Beleuchtens des räumlichen Lichtmodulators (2) darin besteht, daß dieser abwechselnd von drei optischen Wellen (4a, 4b, 4c) für die Farben Rot, Grün und Blau (RGB) synchron mit der durch den räumlichen Lichtmodulator (2) erfolgenden Reproduktion eine Sequenz von Hologrammen des Objekts beleuchtet wird, welche gemäß dem Verfahren nach einem der Ansprüche 1 bis 9 produziert wurden, und die jeweils einer der drei Farben entsprechen, derart, daß ein dreidimensionales Farbbild des Objekts (6) gewonnen wird.

**13.** Verfahren nach einem der Ansprüche 10 bis 12,
bei dem eine Folge von Hologrammen von einem räumlichen Lichtmodulator (2) physisch reproduziert wird, wobei jedes der Hologramme dieser Folge nach dem Verfahren gemäß einem der Ansprüche 1 bis 9 erzeugt ist, derart, daß nach dem Beleuchten des räumlichen Lichtmodulators in drei Dimensionen angeregte Bilder des Objekts (6) wiederhergestellt werden.

**14.** Vorrichtung zum Erzeugen eines Hologramms von einem virtuellen Objekt (6), das in einem dreidimensionalen geometrischen Raum (O,x,a,z) definiert ist,
gekennzeichnet durch:

eine Einrichtung (1) zum Speichern des virtuellen Objekts (6), das in dem dreidimensionalen geometrischen Raum (O,x,y,z) definiert ist,

eine erste Recheneinrichtung (1) zum Erzeugen einer Menge zweidimensionaler Bilder ($80_{nm}$), repräsentativ für das Objekt (6) gemäß unterschiedlichen Projektionszentren in dem dreidimensionalen Raum,

eine zweite Recheneinrichtung (1) zum Erzeugen von Hologrammen ($90_{nm}$) entsprechend den einzelnen zweidimensionalen Bildern ($80_{nm}$), und

eine Kombinationseinrichtung (1) zum Kombinieren der Hologramme ($90_{nm}$) in einem einzigen numerischen Bild derart, daß ein Hologramm (9) des Objekts (6) gebildet wird.

15. Vorrichtung nach Anspruch 14,
bei der die erste Recheneinrichtung eine Projektionsrecheneinrichtung (1) aufweist zum Berechnen der Projektion von Bildern des Objekts (6), betrachtet aus den einzelnen Punkten ($70_{nm}$) einer in einer ersten geometrischen, von dem Objekt (6) disjunkten Ebene (7) gelegenen Punktematrix, auf eine zweite geometrische Ebene (8), die vorzugsweise zwischen dem Objekt (6) und der ersten Ebene (7) liegt und parallel zu der ersten Ebene (7) in dem dreidimensionalen geometrischen Raum (O,x,y,z) verläuft.

16. Vorrichtung nach Anspruch 15,
bei der die Projektionsrecheneinrichtung eine Einrichtung (1) aufweist zum Berechnen der Projektion von Punkten (60) des Objekts (6) auf die zweite Ebene (8) entlang einzelnen Geraden, die durch die Punkte des Objekts und den jeweiligen Punkt der Matrix laufen, und zwar für jeden einzelnen Punkt ($70_{nm}$) der Matrix.

17. Vorrichtung nach einem der Ansprüche 14 bis 16,
bei der die zweidimensionalen Bilder ($80_{nm}$) durch zugehörige reelle Funktionen ($f_{nm}(Y,Z)$) definiert sind und die zweite Recheneinrichtung aufweist:

eine Transformationseinrichtung (1) zum Transformieren (E50, E51) eines gegebenen zweidimensionalen Bildes ($80_{nm}$), das durch die entsprechende reelle Funktion definiert ist, in ein durch eine komplexe Funktion definiertes komplexes Bild,

eine Einrichtung (1) zur Überabtastung (E52) des komplexen Bildes,

eine Simulationseinrichtung (1) zum Simulieren (E53) der Erzeugung eines Beugungsbildes, resultierend aus der Beugung einer optischen Welle (DIF) durch das überabgetastete komplexe Bild,

eine Einrichtung (1) zum Addieren (E54) eines für eine optische Referenzwelle (REF) repräsentativen komplexen Feldes auf das resultierende Beugungsbild ($84_{nm}$) und

eine Einrichtung (1) zum Kodieren (E6) von Werten, die durch die Amplitude der Summe des komplexen Feldes und des Beugungsbildes ($84_{nm}$) erhalten werden, um das zu dem erwähnten gegebenen zweidimensionalen Bild ($80_{nm}$) gehörige Hologramm ($90_{nm}$) zu erzeugen.

18. Vorrichtung nach Anspruch 17,
bei der die Transformationseinrichtung aufweist:

eine Einrichtung (1) zum Bestimmen (E50) von Amplitudenwerten, die jeweils von der Quadratwurzel eines durch die relle Funktion erhaltenen entsprechenden Werts abhängen, und

eine Einrichtung (1) zum Zuordnen (E51) einer Phase zu jedem der Amplitudenwerte derart, daß für jeden Punkt des komplexen Bildes ein Amplitudenwert und ein Phasenwert definiert sind.

19. Vorrichtung nach Anspruch 17 oder 18,
bei der die Simulationseinrichtung eine Einrichtung (1) aufweist zum Berechnen einer der folgenden komplexen Transformationen:
Fourier-Transformation, Walsh-Transformation, Hankel-Transformaton, Transformation orthogonaler Polynome, Hadamar-Transformation, Karhunen-Loeve-Transformation, Transformation diskreter kleiner Wellen in Mehrfachauflösung, Transformation adaptiver kleiner Wellen und Transformation, welche sich aus einer Zusammensetzung von mindestens zwei der vorgenannten Transformationen ergibt.

20. Vorrichtung nach Anspruch 19,
bei der die Simulationseinrichtung eine Einrichtung (1) aufweist zum Berechnen eines dem überabgetasteten komplexen Bild entsprechenden Faltungsprodukts aus zwei Komponenten, indem die zu der erwähnten komplexen Transformation inverse Transformation auf das Produkt der komplexen Transformationen der beiden Komponenten angewendet wird.

21. Vorrichtung nach einem der Ansprüche 14 bis 20,
bei der die Kombiniereinrichtung (1) eine Einrichtung aufweist zum Nebeneinanderstellen der Hologramme ($90_{nm}$) von zweidimensionalen Bildern ($80_{nm}$) in einem einzigen Bild (9), welches das Hologramm des Objekts (6) darstellt.

22. Vorrichtung zum Erzeugen eines dreidimensionalen Bildes aus einem in einem dreidimensionalen geometrischen Raum (O,x,y,z) definierten virtuellen Objekt (6),
gekennzeichnet durch:

eine Vorrichtung gemäß einem der Ansprüche 14 bis 21 zum Erzeugen eines Hologramms (9) des Objekts (6),

einen räumlichen Lichtmodulator (2) zum physischen Reproduzieren des Hologramms (9) des Objekts und

eine Lichtquelle (4) zum Beleuchten des räumlichen Modulators (2), um ein dreidimensionales Bild des Objekts (6) aus diesem Hologramm (9) zu gewinnen.

**23.** Vorrichtung nach Anspruch 22,
bei der der räumliche Lichtmodulator (2) einen Flüssigkristallbildschirm mit einem Pixel-Mittenabstand von weniger als 10 μm und vorzugsweise zwischen 1 μm und 2 μm in zumindest zwei verschiedene Richtungen aufweist.

**24.** Vorrichtung nach Anspruch 22 oder 23,
bei der die Lichtquelle (3) verschiedene Lichtquellen (4a, 4b, 4c) aufweist zum Beleuchten des räumlichen Lichtmodulators (2) abwechselnd mit drei einzelnen optischen Quellen für die Farben Rot, Grün und Blau (RGB) synchron mit der durch den räumlichen Lichtmodulator (2) durchgeführten Wiedergabe einer Folge von Hologrammen des Objekts, die mit Hilfe einer Vorrichtung nach einem der Ansprüche 14 bis 21 erzeugt wurden, und jeweils entsprechend einer der drei erwähnten Farben, derart, daß ein dreidimensionales Farbbild des Objekts wiedergewonnen wird.

**25.** Vorrichtung nach einem der Ansprüche 22 bis 24,
bei der die Vorrichtung nach einem der Ansprüche 14 bis 21 an einer ersten Stelle gelegen ist und der räumliche Lichtmodulator (2) und die Lichtquelle (4) sich an einer zweiten Stelle befinden, wobei die erste und die zweite Stelle voneinander beabstandet sind.

**Claims**

**1.** A method of producing a hologram from a virtual object (6) defined in a three-dimensional geometrical space (O,x,y,z), characterized in that it includes the following steps:

computing (E1-E4) a set of two-dimensional images ($80_{nm}$) representing the object from respective different viewpoints in the three-dimensional space,
computing (E5-E6) holograms ($90_{nm}$) respectively corresponding to said two-dimensional images, and
combining (E7) said holograms ($90_{nm}$) in a common digital image to form a hologram (9) of the object (6).

**2.** A method according to claim 1, wherein said step of computing the set of two-dimensional images includes the following steps:

defining (E1-E2) in the three-dimensional space a matrix of points ($70_{nm}$) in a first geometrical plane (7) separate from the object (6), and
projecting (E3-E4) images of the object as respectively seen from said points ($70_{nm}$) of said matrix onto a second geometrical plane (8) which is preferably between the object (6) and the first plane (7) and parallel to the first plane, the projected images constituting said two-dimensional images ($80_{nm}$).

**3.** A method according to claim 2, wherein, for each point ($70_{nm}$) of the matrix, said projection step consists of projecting points (60) of the object (6) onto the second plane (8) along respective straight lines passing through said points of the object and said each point of the matrix.

**4.** A method according to any one of claims 1 to 3, wherein said step (E5-E6) of computing the holograms is implemented using a technique employing a Fourier transform.

**5.** A method according to any one of claims 1 to 4, wherein said two-dimensional images ($80_{nm}$) are defined by respective real functions ($f_{nm}(Y,Z)$) and said step (E5-E6) of computing the holograms comprises the following steps for a given two-dimensional image ($80_{nm}$):

transforming (E50, E51) the given two-dimensional image defined by the corresponding real function into a complex two-dimensional image defined by a complex function,
oversampling (E52) the complex image ($82_{nm}$),
simulating (E53) the production of a diffracted image resulting from the diffraction of an optical wave (DIF) by the oversampled complex image ($83_{nm}$),
adding (E54) a complex field representing a reference optical wave (REF) to the resulting diffracted image ($84_{nm}$), and
encoding (E6) values taken by the amplitude of the sum of said complex field and the resulting diffracted image ($84_{nm}$) to produce the hologram ($90_{nm}$) associated with said given two-dimensional image ($80_{nm}$).

**6.** A method according to claim 5, wherein said transform step includes the following steps:

determining (E50) amplitude values each depending on the square root of a corresponding value taken by said real function, and
associating (E51) a phase with each of said amplitude values so that an amplitude value and a phase value are defined for each point of the complex image.

7. A method according to claim 5 or claim 6, wherein said simulation step (E53) includes the computation of at least one of the following complex transforms: Fourier transform, Walsh transform, Hankel transform, orthogonal polynomial transform, Hadamar transform, Karhunen-Loeve transform, multiresolution discrete wavelet transform, adaptive wavelet transform and a transform consisting of a composite of at least two of the above transforms.

8. A method according to claim 7, wherein said simulation step (E53) consists of computing a convolutional product, associated with the oversampled complex image, of two components, by applying the transform which is the inverse of said complex transform to the product of the respective complex transforms of said two components.

9. A method according to any one of claims 1 to 8, wherein said step (E7) of combining the holograms comprises juxtaposing the holograms ($90_{nm}$) of the two-dimensional images ($80_{nm}$) in a common image (9) constituting said hologram (9) of the object (6).

10. A method of producing a three-dimensional image from a virtual object (6) defined in a three-dimensional geometrical space (O,x,y,z), characterized in that it includes the following steps:

producing a hologram (9) of the object (6) by the method according to any one of claims 1 to 9,
physically reproducing (E8) said hologram (9) of the object (6) on a spatial light modulator (2), and
illuminating (E8) the spatial light modulator (2) in order to reproduce a three-dimensional image of the object (6) from the hologram (9).

11. A method according to claim 10, wherein said spatial light modulator (2) comprises a liquid crystal screen having a pixel pitch less than 10 µm and preferably from 1 µm to 2 µm in at least two different directions.

12. A method according to claim 10 or claim 11, wherein the step of illuminating the spatial light modulator (2) consists of illuminating it with three optical waves (4a, 4b, 4c) respectively representing the colors red, green and blue (RGB) in turn and in synchronism with reproduction by the spatial light modulator (2) of a sequence of holograms of the object produced by a method according to any one of claims 1 to 9 and each corresponding to one of said three colors, so that a three-dimensional color image of the object (6) is reproduced.

13. A method according to any one of claims 10 to 12, wherein a sequence of holograms is physically reproduced by the spatial light modulator (2) and each of the holograms of the sequence is produced by a method according to any one of claims 1 to 9, so that after the step of illuminating the spatial light modulator animated three-dimensional images of the object (6) are reproduced.

14. A system for producing a hologram from a virtual object (6) defined in a three-dimensional geometrical space (O,x,y,z), characterized in that it includes:

means (1) for storing in memory the virtual object (6) defined in the three-dimensional geometrical space (O,x,y,z),
first computing means (1) for producing a set of two-dimensional images ($80_{nm}$) representing the object (6) from respective different viewpoints in the three-dimensional space,
second computing means (1) for producing holograms ($90_{nm}$) respectively corresponding to said two-dimensional images ($80_{nm}$), and
combining means (1) for combining said holograms ($90_{nm}$) in a common digital image to form a hologram (9) of the object (6).

15. A system according to claim 14, wherein said first computing means comprise projection computing means (1) for computing the projection of images of the object (6) as seen from respective points ($70_{nm}$) of a matrix of points in a first geometrical plane (7) separate from the object (6) onto a second geometrical plane (8) which is preferably between the object (6) and the first plane (7) and parallel to the first plane (7) in the three-dimensional geometrical space (O,x,y,z).

16. A system according to claim 15, wherein said projection computing means comprise means (1) for computing, for each point ($70_{nm}$) of the matrix, the projection of points (60) of the object (6) onto the second plane (8) along respective straight lines passing through said points of the object and said each point of the matrix.

17. A system according to any one of claims 14 to 16, wherein said two-dimensional images ($80_{nm}$) are defined by respective real functions ($f_{nm}(Y,Z)$) and the second computing means comprise:

transform means (1) for transforming (E50, E51) a given two-dimensional image ($80_{nm}$) defined by a corresponding real function into a complex image defined by a complex function,
means (1) for oversampling (E52) the complex image,
simulator means (1) for simulating (E53) the production of a diffracted image resulting from the diffraction of an optical wave (DIF) by the oversampled complex image,

means (1) for adding (E54) a complex field representing a reference optical wave (REF) to the resulting diffracted image ($84_{nm}$), and

means (1) for encoding (E6) values taken by the amplitude of the sum of said complex field and the diffracted image ($84_{nm}$) to produce the hologram ($90_{nm}$) associated with said given two-dimensional image ($80_{nm}$).

**18.** A system according to claim 17, wherein said transform means comprise:

means (1) for determining (E50) amplitude values each depending on the square root of a corresponding value taken by said real function, and

means (1) for associating (E51) a phase with each of said amplitude values so that an amplitude value and a phase value are defined for each point of the complex image.

**19.** A system according to claim 17 or claim 18, wherein said simulator means comprise means (1) for computing one of the following complex transforms: Fourier transform, Walsh transform, Hankel transform, orthogonal polynomial transform, Hadamar transform, Karhunen-Loeve transform, multiresolution discrete wavelet transform, adaptive wavelet transform and a transform consisting of a composite of at least two of the above transforms.

**20.** A system according to claim 19, wherein said simulator means comprise means (1) for computing a convolutional product, associated with the oversampled complex image, of two components, by applying the transform which is the inverse of said complex transform to the product of the respective complex transforms of said two components.

**21.** A system according to any one of claims 14 to 20, wherein the combining means (1) comprise means for juxtaposing the holograms ($90_{nm}$) of the two-dimensional images ($80_{rm}$) in a common image (9) constituting said hologram of the object (6).

**22.** A system for producing a three-dimensional image from a virtual object (6) defined in a three-dimensional geometrical space (O,x,y,z), characterized in that it comprises:

a system according to any one of claims 14 to 21 for producing a hologram (9) of the object (6),

a spatial light modulator (2) for physically reproducing the hologram (9) of the object, and

a light source (4) for illuminating the spatial light modulator (2) in order to reproduce a three-dimensional image of the object (6) from the hologram (9).

**23.** A system according to claim 22, wherein said spatial light modulator (2) comprises a liquid crystal screen having a pixel pitch less than 10 µm and preferably from 1 µm to 2 µm in at least two different directions.

**24.** A system according to claim 22 or claim 23, wherein said light source comprises three separate light sources (4a, 4b, 4c) for illuminating the spatial light modulator (2) with three optical waves respectively representing the colors red, green and blue (RGB) in turn and in synchronism with the reproduction by the spatial light modulator (2) of a sequence of holograms of the object produced by a system according to any one of claims 14 to 21 and each corresponding to one of said three colors so that a three-dimensional color image of the object is reproduced.

**25.** A system according to any one of claims 22 to 24, wherein said system according to any one of claims 14 to 21 is on a first site, the spatial light modulator (2) and the light source (4) are on a second site and the first and second sites are remote from each other.

FIG.1

FIG.2

OBJET VIRTUEL 6 — E0

↓

PLAN 7 — E1

↓

MATRICE $70_{11}$ A $70_{NM}$ — E2

↓

PLAN 8 — E3

↓

PROJECTION — E4

↓

HOLOGRAMMES $75_{11}$ A $75_{NM}$ — E5

FIG.3

↓

DISCRETISATION CODAGE — E6

↓

HOLOGRAMME 9 — E7

↓

ADAPTATION — E78

↓

IMAGE TRIDIMENSIONNELLE — E8

FIG.4

FIG.7

E4

AMPLITUDES $\longrightarrow 81_{nm}$    E50

DIFFUSEUR PSEUDOALEATOIRE $\longrightarrow 82_{nm}$    E51

SURECHANTILLONNAGE $\longrightarrow 83_{nm}$    E52

IMAGE DIFFRACTEE $84_{nm}$    E53

CHAMP DE REFERENCE
EXTRACTION AMPLITUDE
$\longrightarrow 75_{nm}$    E54

E6

**FIG.5**

$830_{nm}$

$831_{nm}$

$83_{nm}$

$82_{nm}$

**FIG.6**

FIG.8

FIG.9